(19) **Europäisches Patentamt**

**European Patent Office**

**Office européen des brevets**

(11) **EP 1 661 955 A1**

(12) **EUROPEAN PATENT APPLICATION**

(43) Date of publication:
**31.05.2006 Bulletin 2006/22**

(51) Int Cl.:
***C09D 5/16*** *(2006.01)*

(21) Application number: **04078234.4**

(22) Date of filing: **29.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(71) Applicant: **Nederlandse Organisatie voor Toegepast-Natuurwetenschappelijk Onderzoek TNO**
**2628 VK  Delft (NL)**

(72) Inventors:
• **Huijs, Franciscus Maria**
  **4819 HE Breda (NL)**

• **Klijnstra, Jacob Wieger**
  **1788 ZC Den Helder (NL)**
• **van Zanten, Joyce**
  **5583 EG Waalre (NL)**

(74) Representative: **Winckels, Johannes Hubertus F. et al**
**Vereenigde,**
**Johan de Wittlaan 7**
**2517 JR Den Haag (NL)**

(54) **Antifouling coating comprising a polymer with functional groups bonded to an enzyme**

(57)    The invention provides a coating comprising a polymer onto which functional groups have been incorporated, wherein at least part of the functional groups are selectively and covalently bonded to amino groups of an enzyme which enzyme has antifouling activity.

**Description**

The present invention relates to a coating comprising a polymer with functional groups incorporated thereon, the use of said coating as an antifouling or hygienic coating, and a method for preventing fouling.

Antifouling coatings are applied to prevent the build-up of algae, seaweed and other marine life on the hull of a ship or other immersed surfaces. The growth of such organisms affects their performance and increases the corrosion rate. For ships fouling leads to increased fuel consumption. It brings about a loss of speed and manoeuvrability. In order to deal with this problem some form of coating is required to protect such surfaces against fouling. For this purpose so-called antifouling coatings have been developed that need to be applied to such surfaces at regular intervals. These antifouling coatings contain one or more chemical compounds that inhibit the growth of algae, seaweed and other marine life on immersed surfaces. The antifouling coatings that are mostly used today contain toxic and highly persistent ingredients based on heavy metals such as tributyltin and cuprous oxide, which ingredients are slowly released into the environment. Such release results in a steady accumulation of these toxic ingredients in the environment where they have harmful effects on wildlife and may damage human health too.

In order to deal with these environmental problems much research is nowadays carried out on the development of alternative antifouling coatings that are based on biologically active compounds that are much less harmful to the environment. In this respect reference can, for instance, be made to US 5,998,200 wherein antifouling coatings have been described which are in essence based on polyurethane matrices on which a biologically active enzyme has been affixed. Although such coatings are much more environmentally friendly than the conventional antifouling coatings, there is in terms of performance still substantial room for improvement. A drawback of these polyurethane-based coatings is that the polyurethane matrix can bond in such a way to the active site of the enzyme that the overall functionality and therefore effectiveness of the enzyme can substantially be inhibited.

Object of the present invention is to provide coatings that can suitably be used for antifouling purposes, that are environmentally friendly and display excellent antifouling activity.

Surprisingly it has now been found that such coatings can be provided when use is made of a polymer onto which functional groups have been incorporated which are selectively and covalently bonded to amino groups of an enzyme having antifouling activity.

Accordingly, the present invention relates to a coating comprising a polymer onto which functional groups have been incorporated, wherein at least part of the functional groups are selectively and covalently bonded to amino groups of an enzyme which enzyme has antifouling activity.

Use of such coating allows a better control of the activity of the enzyme, resulting in an improved antifouling performance. Moreover, these coatings are environmentally friendly.

The functional groups that have been incorporated onto the polymer may suitably comprise epoxy, acetoacetoxy, aldehyde, and/or chloromethyl. Preferably, the functional groups comprise epoxy, acetoacetoxy and or chloromethyl, more preferably chloromethyl.

Various different types of functional groups may be incorporated onto the polymer, however, in practice it is preferred to incorporate one type of functional group onto the polymer.

In accordance with the present invention at least part of the functional groups are selectively and covalently bonded to amino groups of an enzyme. In the context of the present application the term "selectively" means that these functional groups bond preferentially with amino groups of the enzyme.

Suitably, the functional monomer is present in an amount in the range of 1 to 20 weight percent, based on total polymer. Preferably, the functional groups are present in an amount in the range of 2 to 12 weight percent, based on total polymer, and more preferably in an amount of 4 to 8 weight percent, based on total polymer.

Suitably, at least 20 % of the functional groups that are present are selectively and covalently bonded to amino groups of the enzyme. Preferably, at least 50 % of the functional groups that are present are selectively and covalently bonded to amino groups of the enzyme, and more preferably at least 80 % of the functional groups that are present are selectively and covalently bonded to amino groups of the enzyme.

The enzyme to be used in the coating according to the present invention may be any enzyme that shows antifouling activity. Suitably the enzyme comprises Protease, Glucose oxidase, alpha-Amylase and/or Lipase. Preferably, the enzyme comprises Protease, Lipase or Glucose oxidase, and more preferably the enzyme comprises Protease.

In the coating according to the present invention use can be made of two or more different types of enzymes. In practice, however, it is preferred to use one type of enzyme.

The coating in accordance with the present invention may contain any polymer which can suitably be applied in coatings and includes those known in the art. Suitably, the polymer comprises a siloxane, an urethane and/or a vinylgroup , e.g. an acrylate. Preferably, the polymer comprises siloxane and/or an acrylate. More preferably, the polymer comprises an acrylate. More preferably, the polymer comprises an acrylate. When use is made of acrylates a most attractive and controllable enzyme activity is obtained. An advantage of an acrylate is the fact that many conventionally used coatings are also based on acrylates which enables the present polymers to be compatible with these existing systems. The vinyl based polymers to be used in the coating according to the present invention include styrene, butylmethacrylate, methylmethacrylate and the like, on which functional groups have been incorporated via copolymerisation of (one of) these monomers with functional monomers, amongst which glycidyl methacrylate, acetoacetoxy methacrylate, acrolein and/or vinylbenzyl chloride. Most preferably use is made of butylmethacrylate in combination with vinylbenzyl chloride.

The coating according to the present invention may comprise two or more different types of polymers. In practice, however, it is preferred to use one type of polymer.

The polymer may suitably be present in an amount of 20 to 95 weight percent, based on total coating. Preferably, the polymer is present in an amount of 30 to 80 weight percent, based on total coating. More preferably, the polymer is present in an amount of 40 to 60 weight percent, based on total coating.

The coating according to the present invention may in addition comprise a component selected from the group consisting of pigments, fillers, other polymers and/or additives. Such are suitably present in a total amount of 30 to 70 weight percent.

The present coating can either be a solvent based or a waterborne coating. Such coatings can suitably be made in the following way: emulsion polymerisation of an acrylate core followed by emulsion polymerisation of a shell containing a functional acrylate- and/or functional vinyl- and a non-functional acrylate copolymer. After the polymerisation the enzymes are covalently bonded to the functional groups of the polymer. This results in a waterborne system. If a solvent based system is wanted, the waterborne polymer is dried and dissolved in a solvent, like for instance xylene.

The coating in accordance with the present invention can be used as an antifouling, an anticorrosive, a mould resistant or a hygienic coating. Hence, the present invention also relates to the use of any one of the present coatings as an antifouling, an anticorrosive, a mould resistant or a hygienic coating.

The present invention also relates to a method for preventing fouling of an aquatic object by contacting a surface of the object with a coating according to the present invention.

The present invention further provides a method for preventing corrosion of an object by contacting a surface of the object with a coating according to the present invention .

Further, the present invention also provides a method for preventing the formation of mould on an object by contacting a surface of the object with a coating according to the present invention.

The present coatings are also very useful for preventing microbial infection of a surface of an object. Therefore, the present invention also relates to a method for preventing microbial infection of an object by contacting a surface of the object with a coating according to the present invention.

The objects to be contacted in accordance with the above methods include those known in the art.

Examples polymerisation

The following examples are presented to illustrate the present invention in further detail and should by no means be construed as defining the scope of the invention.

Example 1

In a 2,5 litre jacketed glass reactor a mixture of 55 grams butylmethacrylate (BMA) (99%+) and 2200 grams water of a conductivity of 18.2 M$\Omega$ cm are degassed under nitrogen while stirring at 500 rpm (using a double bladed stirrer). To reduce the chain length of the polymer 1-2 %wt of transfer agent (e.g. $CBr_4$ or $CH_2Br_2$) can be added to the monomer. Then the reactor is put under nitrogen and the mixture is heated to 80°C. After addition of the initiator solution (for instance 1.6 grams ammoniumpersulfate 98+% in 50 grams of water of a conductivity of 18.2 M$\Omega$ cm) at 80 °C, the stirring speed is reduced to 350 rpm. The polymerisation is carried out for at least 3 hours after which two dosing apparatus (dosimats) are attached to the reactor. One of the two contains 39 grams of a degassed mixture of a functional monomer (like for instance vinylbenzyl chloride) with butylmethacrylate in the ratio of 1 to 9, 2 to 8 or 3 to 7 percentage weight. The other dosimat contains 2.5 grams of degassed new initiator in 13.5 grams water of a conductivity of 18.2 M$\Omega$ cm for the polymerisation of the copolymer shell. Also 1 percent weight with respect to total polymer of non-ionic surfactant, like for instance Pluronic PE10500, is added for stabilisation during the polymerisation of the shell. These two dosimats are set to add the products in 4 hours. After the polymerisation the product is cooled down to room temperature and dialysed against water of a conductivity of 18.2 M$\Omega$ cm. The particle size of the core is about 250 nm and the particle size of the core/shell polymer is about 350 nm.

Example 2

The same polymerisation can be followed with styrene as a monomer for the core and methylmethacrylate (MMA) and glycidyl methacrylate (GMA) as comonomers in the shell. The following ingredients (see Table 1) are weighed out into the reactor for the polymerisation of the core:

Table 1. Ingredients for core polymerisation.

|  | Reaction 1 |
|---|---|
| [Styrene]$_0$ | 0.46 mol/L |
| Water of a conductivity of 18.2 MΩ·cm | 1.6 L |
| [Ammoniumpersulfate ]$_0$ | 1.69 mmol/L |
| [ ]$_0$ concentration at t=0 | |

The polymerisation is continued for 24 hours at 85 °C under an inert atmosphere. After dialysis of the polymer the polymerisation is continued with the polymerisation of the shell. This can be done by one of the following reactions described in Table 2.

Table 2. Possible reactions for shell polymerisation.

|  | Reaction 2 | Reaction 3 |
|---|---|---|
| Polystyrene | 1.35·10$^{15}$ particles/L | 1.35·10$^{15}$ particles/L |
| [Methylmethacrylate]0 | 0.081 mol/L | 0.054 mol/L |
| [Glycidylmethacrylate ]$_0$ | 0.054 mol/L | 0.081 mol/L |
| [Ammoniumpersulfate ]$_0$ | 1.42 mmol/L | 1.42 mmol/L |
| [ ]$_0$ concentration at t=0 | | |

The polymer is swollen with monomer before the initiator is added. The reaction is continued for 8 hours at 70 °C. The particle sizes range from 300 - 400 nm. After the mixture is cooled down to room temperature the polymer is dialysed against water of a conductivity of 18.2 MΩ cm.

Examples covalent bonding

For the covalent bonding of the enzyme the functionalised polymers from example 1 or 2 are adjusted to a specific pH, depending on the functionality and the enzyme.

Example 3

At first 100 grams of dialysed chloromethyl or acetoacetoxy functional latex from example 1 or 2 is set to pH 7.5 with a phosphate buffer. Then the Protease, Glucose-oxidase, alpha-Amylase, Lipase or a mixture of two or more of these enzymes is added. The amount is calculated by the following equation:

$$mg\ enzyme = \frac{12}{\rho \cdot D} \cdot weight\ polymer$$

where $\rho$ is the density of the solid polymer particle in g/cm$^3$ and D is the mean particle diameter in $\mu$m.
This gives a mono-layer of enzymes on the surface of the polymer. The enzyme is present as a 1 - 5 %wt solution in water. The reaction is carried out for 4 - 24 hours at room temperature, after which the mixture is washed with a 30 - 40 mM solution of ethanolamine or glycine and 0.1 % PEG or Tween 20 in water of a conductivity of 18.2 MΩ·cm. Subsequently the polymer is freeze dried and dissolved in xylene.

Example 4

The same procedure as in example 3 can be followed at pH 9. The pH is set with a carbonate buffer and the enzymes used are Protease, Glucose-oxidase, alpha-Amylase, Lipase or a mixture of two or more of these enzymes.

Example 5

The epoxy functional latex is set to pH 9 or 10 with a carbonate buffer before adding enzyme. This reaction is carried out at room temperature for 4 - 48 hours depending on the enzyme. Protease will degrade if kept at the optimum pH for a long time.

Example 6

The aldehyde functional latex is buffered at pH 8 or 9 with a carbonate or TRIS buffer. This reaction is carried out at room temperature for 4 - 24 hours depending on the enzyme. Then the mixture is washed with a 30 - 40 mM solution of ethanolamine or glycine and 0.1 % Polyethyleenglycol (PEG) or Tween 20 in water of a conductivity of 18.2 MΩ cm. The bond formed between the enzyme and the aldehyde is a reversible Schiff base and must be reduced to produce a stable product. If the enzymes are large the reduction is sometimes unnecessary because several amino groups of the enzyme can be interacting with the polymer which results in a stable product. The reduction, if necessary, can be done by adding 10 % sodium cyanoborohydride. This mixture should be thoroughly washed. Subsequently the polymer is freeze dried and dissolved in xylene.

**Examples enzyme activity measurements**

This section gives details for the various types of enzyme activity tests.

Example 7

The activity of the Protease can be measured with a substrate called N-succinyl-L-Ala-L-Ala-L-Pro-L-Phe-p-nitroanilide. The enzyme causes a reaction where the p-nitroanilide is detached and the solution is coloured yellow. This colouring can be used to measure the activity of the enzyme.
<u>The reagents:</u>

- ♦ TRIS/Ca buffer : 100 mM Tris buffer, pH 8.6, containing 10 mM $CaCl_2$ and 0.005% Tween-80
- ♦ suc-AAPF-pNA stock solution: 160 mM suc-AAPF-pNA in DMSO [Label: 100 mg/ml]

<u>The assay:</u>

Put 980 μl of buffer into a cuvet. Add 10 μl of diluted Protease solution. Add (quickly) 10 μl 100 mg/ml AAPF-stock solution and mix for 5 seconds and read absorbance change during a set period of time at 410 nm in a spectrophotometer or a Plate Reader (25°C). The solutions must be kept at 25 °C using a thermostatic bath.
Instead of the diluted Protease solution the latex can be measured. To avoid interaction of the latex with the light bundle of the spectrophotometer the solution can react for a set period of time after which the latex is centrifuged off and the end point absorbance is read. Division by the time gives the activity.
To measure film activity, films are applied on glass or PMMA slides and the activity of the film is measured in a 25 ml beaker containing 10 ml TRIS/Ca buffer and 10 μl stock solution in a thermostatic bath for 10 minutes. The contacting surface is about 2 $cm^2$.

Example 8

To determine alpha-Amylase activity a different assay is used. In this assay a p-nitrophenyl maltoheptoside substrate with the non-reducing terminal sugar chemically blocked is being used. The rate of p-nitrophenyl release is proportional to alpha-Amylase activity and is monitored at 410 nm.

<u>The reagents:</u>

- ♦ 1% BSA * MOPS Buffer: 50mM 3-(4-morpholino)-propansulfonicacid (MOPS) buffer with 1%wt Bovine Serum Albumin (BSA), 50 mM NaCl and 2.6 mM $CaCl_2$.
- ♦ 200 mM Borate Stop Solution: Boric acid in distilled water.
- ♦ Working Substrate Solution: 1.38 mg maltase added to 54.5 mg substrate blocked p-nitrophenyl maltoheptaoside in 10 ml 1 % BSA*MOPS buffer.

The assay:

Add 50 µl of sample or 1% BSA*MOPS buffer (blank) to the appropriate test tube. Place the test tubes in a water bath at 25 °C. Equilibrate for 2 minutes. Dispense 400 µl aliquots of Working Substrate Solution into the test tubes at timed intervals. Incubate at 25 °C for exactly 5 minutes, after addition of the substrate. At the end of the 5 minutes, immediately add 500 µl of 200 mM Borate stop solution. Then measure the absorbance at 410 nm. Subtract the average buffer blank from the readings. With a standard curve using linear regression the activity can be calculated.

Example 9

Glucose oxidase activity is determined by back titration to quantify the gluconic acid produced in an aerated, buffered glucose solution at pH 5.1 and 35 °C. One titrimetric unit of glucose oxidase will oxidise 3.0 mg glucose to gluconic acid under the conditions of the assay.

The reagents:

- ♦ 50 mM Acetate/Chloride Buffer pH 5.1: 50 mM Acetic acid and 50 mM NaCl in distilled water.
- ♦ 167 mM Buffered Substrate Solution: 167 mM Glucose in acetate/chloride buffer.
- ♦ Standardised 0.05 M HCl solution and 0.1 M NaOH solution
- ♦ 2 % w/v Phenolphthalein indicator solution in methanol.
- ♦ Octadecanol solution in methanol (saturated).

The assay:

Pipet 25 ml of buffered substrate or acetate/chloride buffer (blank) into a 100 ml metric cylinder. Pre-incubate the flasks in a 35 °C water bath for 20 minutes. Dilute the Glucose oxidase sample in buffer to contain approximately 6 titrimetric units/ml. Add exactly 3.0 ml of the diluted Glucose oxidase sample to the substrate and blank tubes. Insert a sparger into the cylinder after addition of the sample and aerate for exactly 15 minutes. The air flow through the sparge should be 700 - 750 ml/minute. If excessive foaming occurs during aeration, add 3 drops of the octadecanol solution. When the sparge is removed, the adhering reaction mixture should be rinsed back into the cylinder with a small amount of distilled water. Immediately add 10 ml of 0.1 M NaOH and 3 drops of phenolphthalein indicator solution to each cylinder. Insert a magnetic stirring bar into the cylinder and stir. Titrate to the phenolphthalein end point (colourless) with standardised 0.05 M HCl solution.

Calculation:

$$Glu\cos e \; oxidase \; activity \; (U/ml) = \frac{(B-T)\cdot 3 \cdot DF}{V} \cdot \frac{N(HCl)}{0.05}$$

Where: B is the titration volume of the blank (ml)
T is the titration volume of the sample (ml)
DF is the dilution factor used
N is the actual molarity of the hydrochloric acid
V is the sample volume (3 ml)

Example 10

The Lipase activity is determined by the tributyrin pH-stat method. The rate of alkali loss is proportional to the activity of the Lipase. The method is based on the hydrolysis of tributyrin by the enzyme, and the alkali consumption is registered as a function of time. 1 LU is the amount of enzyme which liberates 1 µmol titratable butyric acid per minute under the given standard conditions.

The reagents:

- ♦ 0.01M Glycine working buffer: 0.01M Glycine at pH 10.5 ±0.05
- ♦ Enzyme dilutions: lipase in 0.01 M glycine buffer
- ♦ 0.05 M NaOH reagent
- ♦ Emulsification reagent: weigh out 17.9 grams NaCl and 0.41 grams $KH_2PO_4$ in a 1000 ml beaker, add 400 ml demineralised water and add 540 ml glycerol and under vigorous stirring add 6.0 grams gum arabic. Stir until dissolved.
- ♦ Benzoic acid reagent: 240 mg benzioc acid in 200 ml demineralized water.
- ♦ Substrate emulsion: 15 ml tributyrin with 50 ml emulsification reagent and 235 ml demineralized water. Mixed at maximum speed.

The assay:

Pipet 20 ml substrate into a vessel, preheat the substrate for at least 3 minutes at 30 °C in a thermostat, before starting the titration. Add 1- 3 ml enzyme solution (depending on the activity). Adjust pH with 0.05 M NaOH to 6.8 - 6.9. Start the pH-stat titration. Stop the titration after 5 minutes with a constant (linear) rate of alkali addition, though the titration is recorded for at least 8 minutes.

Calculation:

$$Lipase\ activity = \frac{"cm-reading"\ over\ 5\ \min.}{5} \cdot 10 \cdot \frac{1}{20} \cdot \frac{V}{m}$$

The recording speed should be 1 cm/minute and the amplitude should be 1 cm/10µl. Measure the titration rate at the last 5 cm of the curve by drawing a straight line where it corresponds best to the average titration rate.

**Examples antifouling efficacy measurements**

Antifouling efficacy of the enzymes and enzyme containing coatings is measured using laboratory bioassays with barnacle larvae and marine diatoms.

Barnacle settlement inhibition tests

The barnacle settlement test determines settlement inhibitory activity of biocidal compounds. For this test mass reared cyprid larvae of the barnacle species *Balanus amphitrite* are used. Adult barnacles, kept under standardised conditions, are forced to produce naupliar larvae that are collected and grown up separately at constant temperature and a fixed light:dark period. When larvae reach the cyprid stage, which is the settling phase, they are collected and set apart prior to testing.

Test compounds are usually tested in a range of concentrations prepared directly in seawater or after pre-dissolution in a suitable solvent.

Settlement tests are carried out in polystyrene multiwell plates. Wells contain either 1 mL of a test solution or 1 mL of a control solution. Plates are incubated for 24 - 48 hours under constant temperature and light:dark regime to allow settlement and metamorphosis of the cyprids.

After incubation the wells are screened and numbers of settled and non-settled larvae counted using a stereo microscope. Numbers of settled larvae are expressed as a percentage of total larvae in the well. Average % settlement is calculated in four replicates. Subsequently a settlement response curve in relation to substance concentration is drawn and an $EC_{50}$ value, concentration at which 50 % settlement reduction takes place, calculated. This $EC_{50}$ value can be used for comparison to reference and other test compounds.

Results of barnacle settlement tests with enzymes in solution and a reference compound are given in Table 3.

Table 3. $EC_{50}$ values for various enzymes tested in solution.

| Enzyme in solution | $EC_{50}$ value |
|---|---|
| purified protease | 0.32 units/mL |
| Protease I | < 1 $\mu$l/mL |
| Protease II | < 1 $\mu$l/mL |
| $\alpha$-amylase | 20 $\mu$l/mL |
| lipase | 50 $\mu$l/mL |
| Glucose-oxidase | 10 $\mu$l/mL |
| Seanine 211 (commercial biocide) | 0.4 $\mu$g/mL |

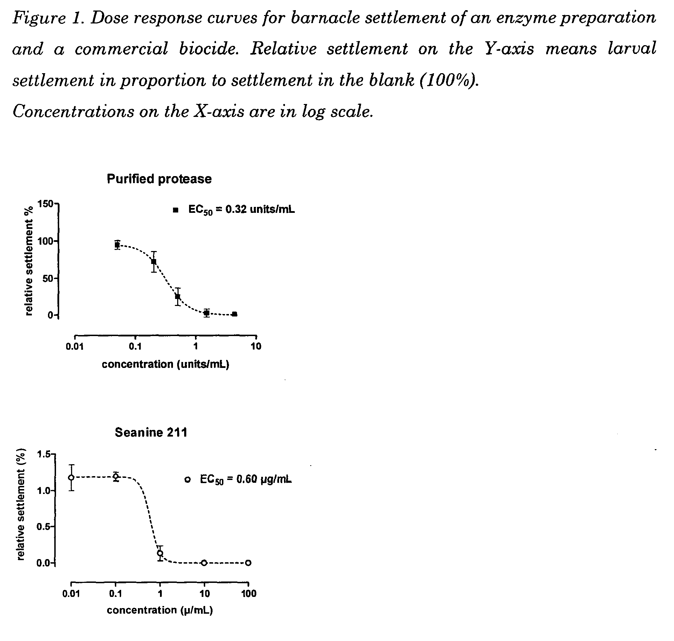

Dose response curves for two compounds are shown in Figures 1.

Enzyme containing coatings

When testing coatings, cyprid larvae are directly exposed onto a coated substrate, usually a metal or glass slide. After 24 - 72 hours incubation numbers of settled and non-settled larvae are counted and number of settled larvae is expressed as a percentage of total larvae exposed to the coated substrate. Blanks and reference substrates are always tested at the same time for comparison with the experimental coatings.

Results with Glycidylmethacrylate based coatings

Coatings based on Polybutylmethacrylate (PBMA) in combination with glycidylmethacrylate (GMA), applied in Petri dishes. Percentage settlement in blank and on control coatings (PBMA; PBMA + GMA) without enzymes are at the same, high level.

Clear inhibitory effects on barnacle settlement behaviour are found on enzyme containing coatings only, either with Protease or with a mixed enzyme preparation (Mix) that is commercially available. Strongest effects are found in a water based coating (see Table 4).

Table 4. Settlement responses of barnacle larvae on glycidylmethacrylate based coatings. Relative settlement means % settlement of larvae in proportion to settlement in the blank (100%).

| | relative settlement (%) | |
|---|---|---|
| | xylene | water based |
| Blank | 100% | 100% |
| PBMA | 118% | 86% |
| PBMA + GMA | 92% | 118% |
| PBMA + GMA + Protease | 23% | 8% |
| PBMA + GMA + Mix | 35% | 0% |

Results with Vinylbenzylchloride based coatings

Another type of coatings is based on vinylbenzylchloride (VBC) binders. Results of laboratory tests with barnacle larvae are shown in Table 5.

Table 5. Relative settlement of barnacle larvae on vinylbenzylchloride based coatings.

| | relative settlement (%) of barnacle larvae |
|---|---|
| Blanc | 100% |
| Coating containing | |
| Glucose oxidase batch 1 | 8% |
| Glucose oxidase batch 2 | 6% |
| Lipase batch 1 | 4% |
| Lipase batch 2 | 1 % |

Table continued

|  | relative settlement (%) of barnacle larvae |
|---|---|
| Protease I batch 1 | 2% |
| Protease I batch 2 | 31% |
| Protease II batch 2 | 5% |
| Protease II batch 2 | 0% |

Barnacle settlement is strongly reduced at all enzyme containing coatings.

Results with silicone based coatings

Another type of coatings is based on silicones. Results of laboratory tests with barnacle larvae are shown in Table 6.

*Table 6. Relative settlement of barnacle larvae on siliconebased coatings.*

| silicone coating with | relative settlement (%) after 3 weeks |
|---|---|
| bound Protease I | 8% |
| bound Protease II | 11 % |
| unbound Protease I | 104% |
| unbound Protease 11 | 87% |
| bound Glucose-oxidase | 4% |
| bound Lipase | 0% |
| Glass slide (blank) | 100% |
| silicone control coating | 66% |
| commercial silicone coating | 83% |
| unbound commercial enzyme mixture | 78% |
| unbound Seanine 211 (biocide) | 0% |

The coatings containing bound enzyme show strong settlement reduction of barnacles in contrast to coatings where the enzyme was loosely added to the formulation. Effects are found with proteases, lipase and glucose oxidase.

Diatom adhesion tests

The diatom growth and adhesion test determines anti-algal activity by assessing the inhibition of micro-algal growth and adhesion to a surface after exposure to various concentrations of test substances. Tests are carried out in 96-well plates or directly on the coating with actively growing 5-day-old cultures of *Amphora coffaeaformis.* A plate reader measuring cell pigment fluorescence (430 nm excitation; 670 nm emission) is used to quantify the diatom population in the well or on the coating. Measuring relative fluorescence units (RFU) at the start of the test and at various times after incubation indicates the growth of the diatom population in relation to concentration of a test compound or on different types of coatings.

When testing enzymes in solutions, serial dilutions of enzyme preparations are made in filtered sterile seawater and wells filled with 150 $\mu$L of enzyme solution. At this stage a first measurement is made to determine background fluorescence of the test solution. After this, a 100-$\mu$L sample of diatom suspension is added to each well and the starting RFU value of the experiment determined by a second measurement of fluorescence.

Growth of the diatom population can be followed by regular fluorescence measurements on subsequent days. Adhesion of diatom cells is determined by measuring fluorescence values before and after a washing procedure of the wells or coating. In this way non-adhering cells are removed enabling the residual diatom population on the well surface or coating to be determined. Results of diatom tests with enzyme preparations in solution are given in Table 7.

*Table* 7. *Enzyme dosages invoking growth inhibition and adhesion reduction in diatoms.*

| Enzymes | Inhibitory dilution | Adhesion reduction starting at |
|---|---|---|
| Protease I | 10$\mu$L/mL | 0.1$\mu$L/mL |

Table continued

| Enzymes | Inhibitory dilution | Adhesion reduction starting at |
|---|---|---|
| Protease II | 10μL/mL | 0.1 μL/mL |
| purified Protease | 5 units/mL | not tested |
| α-amylase | 80 μL/mL | no effect on adhesion |
| lipase | > 200 μL/mL | 1 μL/mL |
| Glucose-oxidase | > 200 μL/mL | 0.05 μL/mL |

Inhibitory dilution is the concentration at which living diatom cells no longer were found. Strongest effects can be observed with proteases; the other three types of enzymes appear to be less toxic.

Inhibitory effects on diatom adhesion start at the dilutions indicated in the Table. It is apparent that effects on adhesion take place at much lower concentrations than lethal effects. Except for α-amylase, which showed no effect on adhesion, all types of enzymes show a strong reduction in adhering cells after washing the wells with three times their volume (750 μL) of seawater. Proteases and also glucose-oxidase are very effective in this respect.

## Claims

1. Coating comprising a polymer onto which functional groups have been incorporated, wherein at least part of the functional groups are selectively and covalently bonded to amino groups of an enzyme which enzyme has antifouling activity.

2. Coating according to claim 1, wherein the functional groups comprise chloromethyl, acetoacetoxy, epoxy and/or aldehyde

3. Coating according to claim 2, wherein the functional groups comprise chloromethyl and/or acetoacetoxy

4. Coating according to any one of claims 1-3, wherein the functional monomer is present in an amount in the range of from 2 to 12 weight percent, based on total polymer.

5. Coating according to claim 4, wherein the functional monomer is present in an amount in the range of from 4 to 8 weight percent, based on total polymer.

6. Coating according to any one of claims 1-5, wherein the enzyme comprises protease, glucose oxidase, alpha-amylase and/or lipase

7. Coating according to any one of claims 1-6, wherein the enzyme comprises protease and/or glucose oxidase

8. Coating according to any one of claims 1-7, wherein an urethane, a siloxane and/or a vinylgroup, e.g. an acrylate have been used to synthesize the polymer.

9. Coating according to claim 8, wherein an acrylate has been used to synthesize the polymer.

10. Coating according to any one of claims 1-9, which comprises in addition to the polymer a component selected from the group consisting of pigments, fillers, other polymers and/or additives

11. Coating according to any one of claims 1-10, wherein the enzyme containing polymer is present in an amount of from 20 to 90 weight percent, based on total coating weight.

12. Coating according to claim 11, wherein the enzyme containing polymer is present in an amount of from 30 to 80 weight percent, based on total coating weight.

13. Coating according to any one of claims 1-12, wherein 20 to 100 percent of the functional groups is bonded with amino groups of the enzyme.

14. Coating according to claim 13, wherein 40 to 90 percent of the functional groups is bonded with amino groups of the enzyme.

15. Coating according to any one of claims 1-14, which coating is a solvent based coating.

16. Use of the coating according to any one of claims 1-15 as an antifouling, an anticorrosive, a mould resistant or a hygienic coating.

17. Method for preventing fouling of an aquatic object comprising contacting a surface of the object with a coating according to any one of claims 1-15.

18. Method for preventing corrosion of an object comprising contacting a surface of the apparatus with a coating according to any one of claims 1-15.

19. Method for preventing the formation of mould on an object comprising contacting a surface of the object with a coating according to any one of claims 1-15.

20. Method for preventing microbial infection of an object which comprises contacting a surface of the object with a coating according to any one of claims 1-15.

Figure 1. Dose response curves for barnacle settlement of an enzyme preparation and a commercial biocide. Relative settlement on the Y-axis means larval settlement in proportion to settlement in the blank (100%).
Concentrations on the X-axis are in log scale.

**Purified protease**

$EC_{50} = 0.32$ units/mL

**Seanine 211**

$EC_{50} = 0.60$ µg/mL

**European Patent Office**

**EUROPEAN SEARCH REPORT**

Application Number

EP 04 07 8234

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 014, no. 539 (C-0782), 28 November 1990 (1990-11-28) & JP 02 227471 A (DAINIPPON INK & CHEM INC; others: 01), 10 September 1990 (1990-09-10) * abstract * ----- | 1-4, 6-12, 15-17 | C09D5/16 |
| X | PATENT ABSTRACTS OF JAPAN vol. 014, no. 539 (C-0782), 28 November 1990 (1990-11-28) & JP 02 227465 A (DAINIPPON INK & CHEM INC; others: 01), 10 September 1990 (1990-09-10) * abstract * ----- | 1,2, 6-12,16, 17 | |
| X | EP 0 866 103 A (NIPPON PAINT CO., LTD) 23 September 1998 (1998-09-23) * page 3, line 33 - line 39 * * page 5, line 56 - page 6, line 2 * * page 6, line 36 - line 40 * ----- | 1,6,7, 10,15-20 | |

TECHNICAL FIELDS SEARCHED (Int.Cl.7)

C09D
C12N

The present search report has been drawn up for all claims

| Place of search | Date of completion of the search | Examiner |
|---|---|---|
| The Hague | 25 April 2005 | Matthijssen, J-J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 04 07 8234

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2005

| Patent document cited in search report | | Publication date | Patent family member(s) | | Publication date |
|---|---|---|---|---|---|
| JP 02227471 | A | 10-09-1990 | JP | 2805799 B2 | 30-09-1998 |
| JP 02227465 | A | 10-09-1990 | JP | 2794749 B2 | 10-09-1998 |
| EP 0866103 | A | 23-09-1998 | JP | 10259326 A | 29-09-1998 |
| | | | DE | 69815913 D1 | 07-08-2003 |
| | | | EP | 0866103 A1 | 23-09-1998 |
| | | | US | 6150146 A | 21-11-2000 |

EPO FORM P0459

For more details about this annex : see Official Journal of the European Patent Office, No. 12/82